# EUROPÄISCHE PATENTANMELDUNG

(11) **EP 0 749 903 A2**
(43) Veröffentlichungstag der Anmeldung: **27.12.1996**
(21) Anmeldenummer: 96109295.4
(22) Anmeldetag: 11.06.1996
(51) Int. Cl.: B65B 59/02, B65G 47/06

(54) **Vorrichtung zum Transportieren von Weichpackungen**

(30) Priorität: 23.06.1995 DE 19522831
(71) Anmelder: Christian Senning Verpackungsautomaten GmbH & Co., D-28239 Bremen (DE)
(72) Erfinder: Dörr, Werner, 27711 Osterholz-Scharmbeck (DE)
(74) Vertreter: Eisenführ, Speiser & Partner

(57) **Zusammenfassung**

Die Erfindung betrifft eine Transportvorrichtung für in einem endlosen Strang ohne Zwischenräume auf einem Förderband (1) ankommende Weichpackungen (13). Ein Vereinzeln bei gleichzeitigem Umlenken der Packungen (13) um 90° erfolgt in einer Umlenkstation. Der einlaufende Packungsstrang wird durch eine Rollenanordnung (2) von oben her auf das Förderband (1) gedrückt und von diesem reibschlüssig mitgenommen.

Um bei Höhentoleranzen oder beim Wechsel von Chargen der ankommenden Weichpackungen (13) den Abstand zwischen der Rollenanordnung (2) und dem Förderband (1) nicht jedes Mal manuell nachstellen zu müssen, ist eine Fühlereinrichtung vorgesehen, die die Höhe der Packung (13) über dem Förderband (1) mißt. Die Rollenanordnung (2) wird dann abhängig von der gemessenen Höhe selbttätig in ihrer Höhenlage gegenüber dem Förderband (1) nachgestellt.

## Beschreibung

Die Erfindung betrifft eine Vorrichtung zum Transportieren von in einem endlosen Strang ohne Zwischenräume auf einem Förderband ankommenden Weichpackungen mit chargenweise unterschiedlichen Höhen und zum Vereinzeln bei gleichzeitigem Umlenken der Packungen um 90° in einer Umlenkstation, wobei der Packungsstrang bei Einlauf in die Umlenkstation durch eine an die unterschiedlichen Höhen der verschiedenen Chargen anzupassende Rollenanordnung von oben her auf das Förderband gedrückt und von diesem reibschlüssig mitgenommen wird.

Solche Transportvorrichtungen sind in der Verpackungsindustrie bekannt, z.B. zum Verpacken von Taschentuch-Weichpackungen zu größeren Gebinden. Um eine einwandfreie, reibschlüssige Mitnahme auf dem Förderband in die Umlenkstation zu gewährleisten, muß der Abstand der Rollenanordnung gegenüber dem Förderband sorgfältig eingestellt werden, weil sonst z.B. bei zu großem Abstand die Mitnahmekraft zu gering ist und bei zu geringem Abstand entweder die Packungen beschädigt werden oder es zu einem Verstopfen kommen kann. Sollen nun über ein und dieselbe Transportvorrichtung abwechselnd verschiedene Chargen von Weichpackungen verarbeitet werden, die in ihrer Höhe geringfügig voneinander abweichen, so muß bei jeder neuen Charge eine Neueinstellung der Höhe der Rollenanordnung vorgenommen werden.

Aus der US-A-3,823,813 ist eine Transportvorrichtung für eine Verpackungsmaschine bekannt, bei der auf einem Förderband ankommende Papierrollen gruppenweise aus dem ankommenden Rollenstrang vereinzelt werden. Die Rollen werden hierbei zwischen einem Förderband und angetriebenen Niederhalterollen mitgenommen. Der Abstand zwischen den Niederhalterollen und dem Förderband ist einstellbar.

Aus der DE-A-23 59 825 ist eine Transporteinrichtung in einer Verpackungsmaschine beschrieben, bei der einzelne Packungen zwischen zwei seitlich umlaufenden Transportriemen mitgenommen werden. Außerdem ist oberhalb des Packungsstranges ein federbelasteter Deckel vorgesehen.

Schließlich ist aus der DE-C-32 30 533 eine Vorrichtung zum Absondern von Packungen aus einem Packungsstrang durch Querabschieben bekannt.

Der vorliegenden Erfindung liegt die Aufgabe zugrunde, eine Vorrichtung der eingangs genannten Art derart zu verbessern, daß eine solche Neueinstellung beim Chargenwechsel nicht erforderlich ist und jederzeit eine optimale Reibungsmitnahme der Weichpackungen zwischen der Rollenanordnung und dem Förderband gewährleistet ist.

Diese Aufgabe wird bei einer Vorrichtung der gattungsgemäßen Art gemäß der vorliegenden Erfindung dadurch gelöst, daß vor der Rollenanordnung eine Fühlereinrichtung vorgesehen ist, die die Höhe der Packungen über dem Förderband mißt, und daß die Rollenanordnung abhängig von der durch die Fühlereinrichtung gemessenen Höhe selbsttätig in ihrer Höhenlage gegenüber dem Förderband nachgestellt wird. Durch diese Maßnahme wird erreicht, daß beim Einlauf einer Weichpackung einer neuen Charge sowohl die Packungshöhe als auch die Nachgiebigkeit automatisch abgetastet und die Höhe der Rollenanordnung selbsttätig nachgestellt wird, ohne daß es in der Zwischenzeit zu Transportunterbrechungen oder Verstopfungen kommen kann.

Die Fühlereinrichtung der Transportvorrichtung ist vorzugsweise ein nachgiebig aufgehängter, am Einlauf abgerundeter Gleitschuh, der auf einen Positionsgeber einwirkt. Als Positionsgeber wird vorzugsweise ein von dem Gleitschuh betätigter elektronischer Initiator verwendet.

In einer bevorzugten Ausführungsform ist die Rollenanordnung durch eine Parallellenkeranordnung aufgehängt und wird vorzugsweise durch einen Spindelantrieb mit Elektromotor verstellt. Bei der Rollenanordnung ist vorzugsweise mindestens die erste Rolle etwas höher aufgehängt als die folgenden.

Die Umlenkstation der Transportvorrichtung weist vorzugsweise einen umlaufenden Stollen-Zahnriemen auf, dessen Stollen die auflaufenden Packungen aus dem Packungsstrang quer um 90° abschieben.

Die Erfindung wird nachfolgend anhand eines Ausführungsbeispiels unter Bezugnahme auf die beigefügten Zeichnungen näher erläutert.

Es zeigen:
- Figur 1:: eine schematisierte Seitenansicht der erfindungsgemäßen Vorrichtung und
- Figur 2:: eine Darstellung der wichtigsten Teile der Vorrichtung nach Figur 1 in Draufsicht.

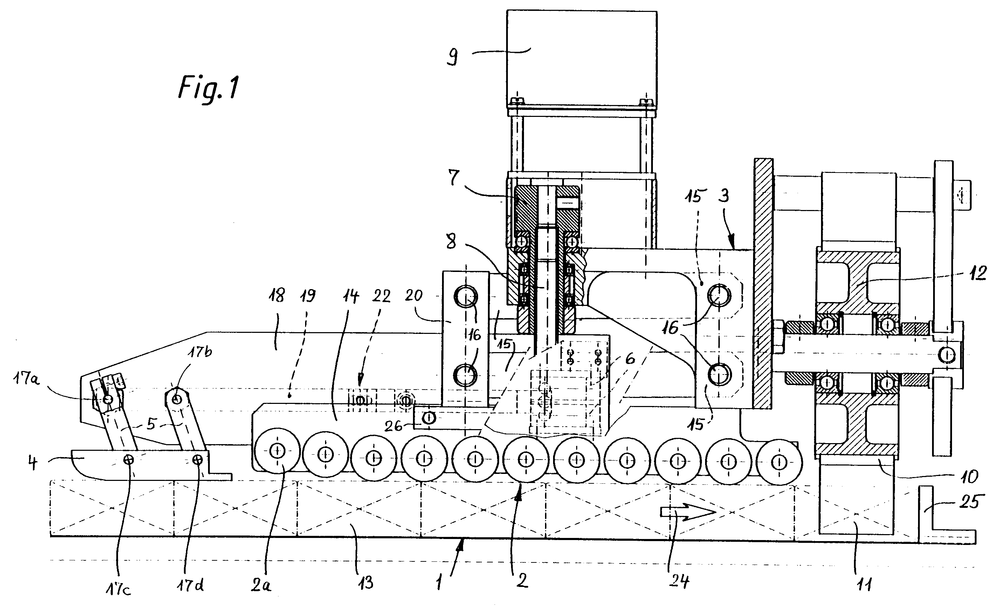

In der Figur 1 ist zu sehen, daß ankommende Weichpackungen 13 ohne Abstand voneinander auf einem Förderband 1 einlaufen und von einer eine Vielzahl von Rollen aufweisenden Rollenanordnung 2 derart niedergedrückt werden, daß eine reibungsschlüssige Mitnahme der Weichpackungen 13 auf dem Förderband 1 in Richtung des Pfeiles 24 erfolgt.

Die Weichpackungen 13 laufen gegen einen Anschlag 25 (im rechten Bereich des Bildes) und werden von einem umlaufenden Zahnriemen 10 mit Stollen 11 senkrecht zur ankommenden Richtung 24 abgeschoben. Der Zahnriemen 10 wird mittels einer Riemenscheibe 12 umgelenkt. Die Umlaufgeschwindigkeit des Zahnriemens 10 und der Abstand zwischen den Stollen 11 ist so auf die Einlaufgeschwindigkeit der Weichpackungen 13 eingerichtet, daß die Packungen 13 aus der Transportvorrichtung im bestimmten Abstand vereinzelt ausgeschoben werden.

Damit die Packungen 13 in die Rollenanordnung 2 unbehindert einlaufen können, ist zumindest die erste Rolle 2a gegenüber den anderen Rollen der Rollenanordnung 2 erhöht angeordnet. Vor der Rollenanordnung 2 ist ein beweglich aufgehängter Gleitschuh 4 angeordnet, der auf der Einlaufseite abgerundet ist. Der Gleitschuh 4 ist mittels Parallellenker an einer Tragplatte 18 aufgehängt und durch eine Feder (nicht gezeigt) entlastet, um möglichst feinfühlig auf den Oberflächen der Packungen 13 aufzuliegen.

Die gesamte Rollenanordnung 2 ist an einem Rollenträger 14 angeordnet, der aus zwei seitlichen Wangen besteht, die durch eine Quertraverse 26 miteinander verbunden sind. Mit dieser Anordnung ist ein senkrecht angeordneter Halter 20 verbunden, der über Achsen 16 und zwei Parallellenker 15 an einem feststehenden Gestell in senkrechter Richtung beweglich aufgehängt ist. Zwischen dem festen Gestell 3 und dem Halter 20 ist ein elektromotorischer Spindelantrieb vorgesehen, der aus einem Elektromotor 9, einer Spindelmutter 7 und einer Spindelschraube 8 besteht. Durch diesen Spindelantrieb ist es möglich, die Höhe des Rollenträgers 14 mit der Rollenanordnung 2 gegenüber dem Gestell 3 nachzustellen.

Es wird noch erwähnt, daß aufgrund der Parallellenkeraufhängung des Halters 20 gegenüber dem Gestell 3 bei einer Höhenverstellung eine geringe Wanderung in waagerechter Richtung erfolgt, was durch einen entsprechenden Ausgleichsmechanismus (nicht gezeigt) aufgefangen wird.

Der Rollenträger 14 ist fest mit einer Tragplatte 18 verbunden, an der einerseits der Gleitschuh 4 aufgehängt ist. Andererseits ist an der Tragplatte 18 ein Positionsgeber 6 befestigt, der nachfolgend noch in seiner Funktion beschrieben werden soll.

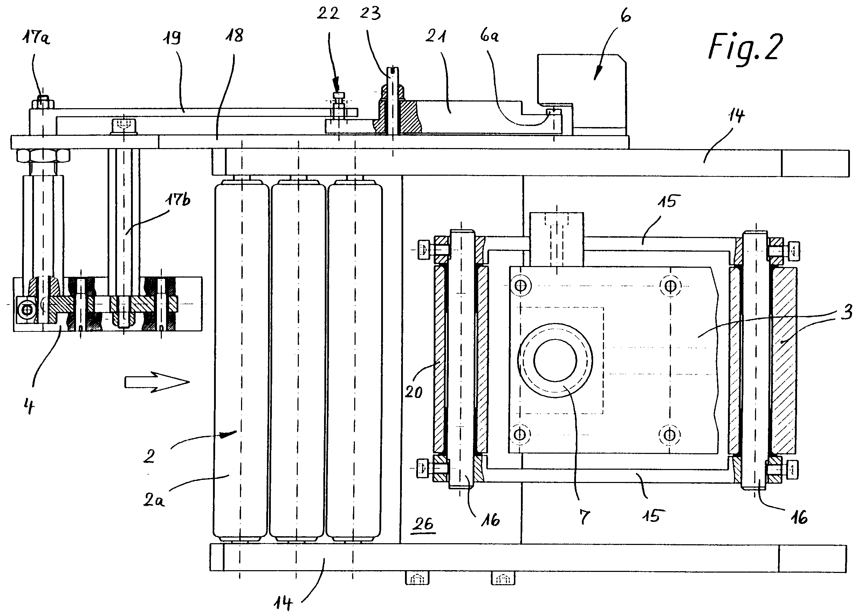

Wie bereits vorher erwähnt, ist der Gleitschuh 4 mittels zweier Parallellenker 5 an der Tragplatte 18 verschwenkbar aufgehängt, wobei die Parallellenker 5 in einer Welle 17a und Achsen 17b, 17c und 17d gelagert sind. Mit der Welle 17a ist (siehe hierzu Figur 2) ein Hebel 19 verbunden, der über ein Gelenk 22 mit einem kurzen Arm eines weiteren Hebels 21 gekuppelt ist. Der weitere Hebel 21 weist an seinem längeren Arm ein Eisenelement 6a, z.B. eine Schraube, auf. Dieses Eisenelement 6a steht dem empfindlichen Bereich des Positionsgebers 6 gegenüber, der vorzugsweise als elektronischer Initiator ausgebildet ist.

Wird nun z.B. durch eine einlaufende dickere Weichpackung 13 der Schuh 4 (siehe Figur 1) geringfügig angehoben, so wird die Welle 17a entgegen dem Uhrzeigersinn (in der Zeichnung gesehen) verschwenkt und hebt den Hebel 19 an. Diese Anhebbewegung wird am Ende des Hebels 19 mittels des Gelenkes 22 auf den kurzen Arm des weiteren Hebels 21 übertragen und senkt den längeren Arm des Hebels 21 ab, so daß das Eisenelement 6a gegenüber dem Positionsgeber 6 nach unten wandert. Hierdurch spricht der Positionsgeber 6 an und gibt (über eine entsprechende elektronische Steuerschaltung, nicht gezeigt) ein entsprechendes Signal an den Elektromotor 9, so daß der Spindelantrieb den Halter 20 mit Rollenträger 14 und Tragplatte 18 nach oben bewegt. Auf diese Weise wird der Abstand zwischen der Rollenanordnung 2 und dem Förderband 1 an die einlaufenden, geringfügig dickeren Packungen 13 angepaßt. Laufen dagegen dünnere Packungen 13 ein, so bewegt sich der Gleitschuh 4 nach unten, was eine Verdrehung der Welle 17a im Uhrzeigersinne (in der Zeichnung gesehen) zur Folge hat. Dementsprechend wird über den Hebel 19 und das Gelenk 22 der kürzere Arm des Hebels 21 abgesenkt, während der längere Arm des Hebels 21 angehoben wird. Diese Aufwärtsbewegung des Eisenelements 6a wird durch den Positionsgeber 6 erkannt und der Elektromotor 9 in der entsprechenden Drehrichtung eingeschaltet, so daß der Rollenträger 2 geringfügig abgesenkt wird.

Der Hebel 21 ist an der Tragplatte 18 mittels eines Lagerzapfens 23 schwenkbar aufgehängt. Es ist selbstverständlich möglich, die Bewegungsübertragung von dem Gleitschuh 4 zum Positionsgeber 6 auch auf andere Weise vorzunehmen, jedoch hat sich die beschriebene Anordnung als zuverlässig erwiesen. Es versteht sich von selbst, daß durch entsprechende Gewichtsausgleichsfedern zwischen den einzelnen Hebeln das Gleichgewicht der Anordnung ausbalanciert werden sollte, um eine besonders feinfühlige Regelung zu erreichen.

Der Positionsgeber 6 kann, zusammen mit dem Eisenelement 6a auf vielfältigste Weise ausgebildet sein. Im vorliegenden Fall wird die Eisenschraube 6a durch entsprechende Magnetfelder im Positionsgeber 6 ausgewertet und über eine elektronische Steuerschaltung an den Antriebsmotor 9 weitergegeben. Es ist auch möglich, statt dessen eine optoelektronische Abtastvorrichtung vorzusehen.

## Patentansprüche

1. Vorrichtung zum Transportieren von in einem endlosen Strang ohne Zwischenräume auf einem Förderband (1) ankommenden Weichpackungen (13) mit chargenweise unterschiedlichen Höhen und zum Vereinzeln bei gleichzeitigem Umlenken der Packungen (13) um 90° in einer Umlenkstation, wobei der Packungsstrang bei Einlauf in die Umlenkstation (10, 11, 12) durch eine an die unterschiedlichen Höhen der verschiedenen Chargen anzupassende Rollenanordnung (2) von oben her auf das Förderband (1) gedrückt und von diesem reibschlüssig mitgenommen wird,
dadurch gekennzeichnet,
daß vor der Rollenanordnung (2) eine Fühlereinrichtung (4, 5, 6) vorgesehen ist, die die Höhe der Packungen (13) über dem Förderband (1) mißt, und
daß die Rollenanordnung (2) abhängig von der durch die Fühlereinrichtung (4, 5, 6) gemessenen Höhe selbsttätig in ihrer Höhenlage gegenüber dem Förderband (1) nachgestellt wird.

2. Vorrichtung nach Anspruch 1,
dadurch gekennzeichnet, daß die Fühlereinrichtung (4, 5, 6) ein nachgiebig aufgehängter, am Einlauf abgerundeter Gleitschuh (4) ist, der auf einen Positionsgeber (6) einwirkt.

3. Vorrichtung nach Anspruch 2,
dadurch gekennzeichnet, daß der Positionsgeber (6) einen von dem Gleitschuh (4) betätigten, elektronischen Initiator aufweist.

4. Vorrichtung nach Anspruch 2 oder 3,
dadurch gekennzeichnet, daß der Gleitschuh (4) durch Parallelogrammlenker (5) aufgehängt ist.

5. Vorrichtung nach einem der vorstehenden Ansprüche,
dadurch gekennzeichnet, daß die Rollenanordnung (2) durch eine Parallellenkeranordnung (16) aufgehängt und durch einen Spindelantrieb (8, 9) mit Elektromotor (9) verstellbar ist.

6. Vorrichtung nach einem der vorstehenden Ansprüche,
dadurch gekennzeichnet, daß bei der Rollenanordnung (2) mindestens die erste Rolle (2a) etwas höher aufgehängt ist als die folgenden.

7. Vorrichtung nach einem der vorstehenden Ansprüche,
dadurch gekennzeichnet, daß die Umlenkstation (10, 11, 12) mit einem umlaufenden Stollen-Zahnriemen (10, 11) ausgerüstet ist, dessen Stollen (11) die auflaufenden Packungen (13) aus dem Packungsstrang quer um 90° abschieben.
